(19) Europäisches Patentamt
European Patent Office
Office européen des brevets

(11) Veröffentlichungsnummer: **0 133 223**
**B1**

(12) # EUROPÄISCHE PATENTSCHRIFT

(45) Veröffentlichungstag der Patentschrift: **01.04.87**

(51) Int. Cl.⁴: **C 07 D 319/06**, C 08 G 18/80, C 08 G 18/08, C 09 D 3/72

(21) Anmeldenummer: **84108006.2**

(22) Anmeldetag: **09.07.84**

(54) **Verfahren zur Herstellung von organischen Polyisocyanaten mit zumindest teilweise blockierten Isocyanatgruppen, die nach dem Verfahren erhältlichen Verbindungen und ihre Verwendung zur Herstellung von Polyurethanen, Einbrennlacken oder wässrigen Polyisocyanatlösungen bzw. -dispersionen.**

(30) Priorität: **20.07.83 DE 3326188**

(43) Veröffentlichungstag der Anmeldung: **20.02.85 Patentblatt 85/8**

(45) Bekanntmachung des Hinweises auf die Patenterteilung: **01.04.87 Patentblatt 87/14**

(84) Benannte Vertragsstaaten: **BE DE FR GB IT NL**

(56) Entgegenhaltungen:
**EP - A - 0 053 766**
**FR - A - 2 292 724**
**FR - A - 2 337 996**
**FR - A - 2 338 273**

(73) Patentinhaber: **BAYER AG, Konzernverwaltung RP Patentabteilung, D-5090 Leverkusen 1 Bayerwerk (DE)**

(72) Erfinder: **Potter, Terry A., Dr., 83E Bejamin Drive, New Martinsville West Virginia 26155 (US)**
Erfinder: **Nachtkamp, Klaus, Dr., Leuchterstrasse 112, D-5000 Köln 80 (DE)**
Erfinder: **Welder, Franz, Dr., Jakob-Fröhlen-Strasse 36, D-5090 Leverkusen 3 (DE)**

**EP 0 133 223 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zur Herstellung von organischen Polyisocyanaten mit zumindest teilweise blockierten Isocyanatgruppen unter Verwendung von cyclischen Dicarbonylverbindungen als Blockierungsmittel für Isocyanatgruppen, die nach diesem Verfahren erhältlichen Polyisocyanate mit zumindest teilweise blockierten Isocyanatgruppen, sowie ihre Verwendung als Reaktionspartner für organische Polyhydroxylverbindungen bei der Herstellung von Polyurethankunststoffen, von wässrigen Einbrennlacken oder von wässrigen Polyisocyanatlösungen oder -dispersionen.

Blockierte Polyisocyanate, die bei erhöhter Temperatur mit Verbindungen mit Zerewitinow-aktiven Wasserstoffatomen reagieren, sind bekannt und werden z.B. in Houben-Weyl, «Methoden der organischen Chemie», Band XIV/2, Seiten 61-70 oder bei Z.W. Wicks, Jr., Progress in Organic Coatings 9, 3-28 (1981) beschrieben. Geeignete Blockierungsmittel für Isocyanate sind z.B. Phenole, Caprolactam, Oxime und CH-acide Verbindungen wie Acetessigsäurealkylester und Malonsäuredialkylester.

Die blockierten Polyisocyanate des Standes der Technik eignen sich in Kombination mit polyfunktionellen Verbindungen, die Zerewitinow-aktive Wasserstoffatome tragen, zur Herstellung von thermisch härtbaren Kunststoffen, insbesondere von Einbrennlacken und -Beschichtungen. Sie werden dabei vorwiegend in Form von Lösungen in organischen Lösungsmitteln angewandt (vgl. z.B. EP-A-0 053 766).

Aus Gründen des Umweltschutzes und zur Einsparung erdölabhängiger organischer Lösungsmittel ist es nun von zunehmendem Interesse, solche Einbrenn-Harze auch in Form von wässrigen Dispersionen oder Lösungen anwenden zu können. Es hat daher nicht an Versuchen gefehlt, wasserlösliche bzw. -dispergierbare blockierte Polyisocyanate herzustellen. Dabei wird im allgemeinen so vorgegangen, dass ein Teil der Isocyanatgruppen der Polyisocyanate irreversibel mit Verbindungen umgesetzt wird, die ionische, potentiell ionische oder nicht-ionisch-hydrophile Gruppen tragen. Die restlichen Isocyanatgruppen werden mit einem oder mehreren der obengenannten, bei erhöhter Temperatur leicht wieder abspaltbaren Blockierungsmittel «verkappt». Diese Verfahrensweise ist zum Beispiel in DE-A-2 456 469 (= FR-A-2 292 724) und EP-A-12 348 beschrieben. Als hydrophile bzw. potentiell hydrophile Aufbaukomponenten sind dort z.B. Hydroxycarbonsäuren, Hydroxylgruppen aufweisende tertiäre Amine, Hydroxypolyethylenoxide und Polyaminosulfonate aufgeführt.

Nachteilig an dieser Verfahrensweise ist, dass stets ein beträchtlicher Teil der NCO-Gruppen der eingesetzten Polyisocyanate für die Reaktion mit den genannten hydrophilen Aufbaukomponenten verbraucht wird. Im blockierten Polyisocyanat steht dann dieser Anteil der Funktionalität für eine thermische Vernetzungsreaktion mit Zerewitinow-aktive Wasserstoffatome tragenden Reaktionspartnern bei den normalerweise angewandten Einbrenntemperaturen nicht mehr zur Verfügung. Die beschriebenen hydrophilen blockierten Polyisocyanate weisen daher gegenüber den entsprechenden blockierten Isocyanaten, die aus organischer Lösung angewandt werden, technische Nachteile auf.

Aufgabe der vorliegenden Erfindung war es nun, blockierte Polyisocyanate zur Verfügung zu stellen, die nicht nur aus organischer Lösung, sondern auch aus wässriger Phase anwendbar sind, ohne dass zu ihrer Herstellung Modifizierungen notwendig wären, die zu den oben beschriebenen technischen Nachteilen führen.

Diese Aufgabe konnte durch die Bereitstellung des nachstehend näher beschriebenen erfindungsgemässen Verfahrens bzw. der nachstehend näher beschriebenen erfindungsgemässen Verfahrensprodukte gelöst werden.

Das erfindungsgemässe Verfahren beruht auf der überraschenden Beobachtung, dass Umsetzungsprodukte bestimmter, nachstehend näher beschriebener cyclischer Dicarbonylverbindungen mit organischen Polyisocyanaten blockierte Polyisocyanate darstellen, die bei relativ niedrigen Einbrenntemperaturen mit Verbindungen mit Zerewitinow-aktiven Wasserstoffatomen reagieren und darüber hinaus in Gegenwart schwacher organischer Basen, wie z.B. tertiären Aminen, in Wasser löslich oder dispergierbar sind. Überraschend war auch, dass sich die cyclischen Dicarbonylverbindungen nicht nur an aromatische, sondern auch an aliphatische Isocyanate addieren lassen. Dies ist für eine Anwendung der Addukte auf dem Gebiet der Lacke und Beschichtungen wegen der Lichtechtheit aliphatischer Isocyanate von besonderer technischer Bedeutung.

Aus der Literatur sind bislang lediglich Addukte von cyclischen Dicarbonylverbindungen der erfindungswesentlichen Art mit aromatischen Monoisocyanaten bekannt geworden [U. Herzog, H. Reinshagen, Eur. J. Med. Chem. 10, 323 (1975)].

Mit aliphatischen Isocyanaten liessen sich nach Angaben dieser Autoren keine entsprechenden Addukte herstellen. Ziel der zitierten Arbeiten war die Herstellung von Pharmazeutika und Insektiziden (siehe auch US-A-4 073 932, US-A-4 123 551, FR-A-2 338 273 und FR-A-2 337 996). Addukte aus polyfunktionellen Isocyanaten und den genannten cyclischen Dicarbonylverbindungen wurden bisher nicht beschrieben. Ebenso ist noch nichts über eine Reaktivität solcher Addukte gegenüber Verbindungen mit Zerewitinow-aktiven Wasserstoffatomen sowie über Versuche, solche Addukte für Anwendungen auf dem Kunststoffsektor einzusetzen, bekannt geworden.

Gegenstand der vorliegenden Erfindung ist ein Verfahren zur Herstellung von organischen Polyisocyanaten mit zumindest teilweise blockierten Isocyanatgruppen durch zumindest teilweise Blockierung der Isocyanatgruppen von organischen Polyisocyanaten mit Blockierungsmitteln für Isocyanatgruppen, dadurch gekennzeichnet, dass man als Blockierungsmittel

a) Verbindungen der Formel

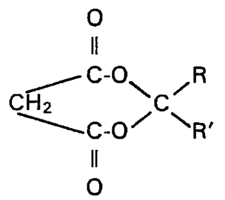

verwendet, wobei

R und R′ für gleiche oder verschiedene Reste stehen und Alkylreste mit 1 bis 4 Kohlenstoffatomen bedeuten oder zusammen mit dem, mit den Sauerstoffatomen verknüpften Kohlenstoffatomen einen Cyclohexan- oder Cyclopentanring bilden,

und gegebenenfalls zusätzlich

b) aus der Polyurethanchemie bekannte Blockierungsmittel

verwendet, wobei das Blockierungsmittel a) in, einem Molverhältnis von Blockierungsmittel a) zu Isocyanatgruppen des Ausgangspolyisocyanats von mindestens 0,1 : 1 entsprechenden Mengen zum Einsatz gelangt, und wobei, im Falle der Mitverwendung von Blockierungsmitteln b), diese vor, gleichzeitig mit oder nach der Umsetzung des Ausgangspolyisocyanats mit dem Blockierungsmittel a) mit dem Ausgangspolyisocyanat zur Reaktion gebracht werden.

Gegenstand der vorliegenden Erfindung sind auch die nach diesem Verfahren erhältlichen organischen Polyisocyanate mit zumindest teilweise blockierten Isocyanatgruppen.

Gegenstand der Erfindung ist auch die Verwendung der nach diesem Verfahren erhältlichen Polyisocyanate mit zumindest teilweise blockierten Isocyanatgruppen als Reaktionspartner für organische Polyhydroxylverbindungen bei der Herstellung von Polyurethankunststoffen, insbesondere Lacken, Beschichtungs- oder Dichtungsmassen auf Polyurethanbasis.

Gegenstand der Erfindung ist auch die Verwendung der nach dem erfindungsgemässen Verfahren erhältlichen Polyisocyanate mit zumindest teilweise blockierten Isocyanatgruppen zur Herstellung von wässrigen Einbrennlacken, dadurch gekennzeichnet, dass man die Polyisocyanate mit wässrigen Lösungen oder Dispersionen von organischen Verbindungen mit mindestens zwei gegenüber Isocyanatgruppen reaktionsfähigen Gruppen in Gegenwart einer, die Löslichkeit bzw. Dispergierbarkeit der Polyisocyanate in Wasser gewährleistenden Menge eines tert.-Amins unter Einhaltung eines Äquivalentverhältnisses von blockierten Isocyanatgruppen zu gegenüber Isocyanatgruppen reaktionsfähigen Gruppen von 0,1 : 1 bis 1 : 1,2 gegebenenfalls unter Mitverwendung von in der Lacktechnologie üblichen Hilfs- und Zusatzmitteln vermischt.

Gegenstand der Erfindung ist schliesslich auch die Verwendung der nach dem erfindungsgemässen Verfahren erhältlichen Polyisocyanate mit zumindest teilweise blockierten Isocyanatgruppen zur Herstellung von wässrigen Polyisocyanatlösungen oder -dispersionen, dadurch gekennzeichnet, dass man die Polyisocyanate in Gegenwart einer, die Löslichkeit bzw. Dispergierbarkeit der Polyisocyanate gewährleistenden Menge eines tert.-Amins mit Wasser vermischt.

Ausgangsmaterialien für das erfindungsgemässe Verfahren sind beliebige organische Polyisocyanate und, die obengenannte Struktureinheit aufweisende, cyclische Dicarbonylverbindungen.

Für das erfindungsgemässe Verfahren sind grundsätzlich beliebige organische Polyisocyanate bzw. beliebige Gemische organischer Polyisocyanate geeignet. Beispiele hierfür sind u.a. Verbindungen der Formel

$$Q\,(NCO)_n$$

in welcher

Q für einen aromatischen, gegebenenfalls Methylsubstituenten oder Methylenbrücken aufweisenden Kohlenwasserstoffrest mit insgesamt 6 bis 15 Kohlenstoffatomen, einen aliphatischen Kohlenwasserstoffrest mit 4 bis 18, vorzugsweise 6 bis 10 Kohlenstoffatomen, einen cycloaliphatischen Kohlenwasserstoffrest mit 6 bis 15 Kohlenstoffatomen oder einen Xylylenrest steht, und

n für eine ganze Zahl von 2 bis 5 steht.

Typische Beispiele für derartige, erfindungsgemäss geeignete Polyisocyanate sind Tetramethylendiisocyanat, Hexamethylendiisocyanat, 1,12-Dodecandiisocyanat, Cyclohexan-1,3- und 1,4-diisocyanat sowie beliebige Gemische dieser Isomeren, 1-Isocyanato-3,3,5-trimethyl-5-isocyanatomethylcyclohexan (IPDI), Perhydro-2,4′- und/oder -4,4′-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, 3,2′- und/oder 3,4-Diisocyanato-4-methyl-diphenylmethan, Naphthylen-1,5-diisocyanat, Triphenyl-methan-4,4′-4′′-triisocyanat, Polyphenylpolymethylen-polyisocyanate, wie sie durch Anilin-Formaldehyd-Kondensation und anschliessende Phosgenierung erhalten und z.B. in den GB-A-874 430 und 848 671 beschrieben werden. Neben diesen einfachen Polyisocyanaten sind auch Heteroatome in dem, die Isocyanatgruppen verknüpfenden Rest enthaltende Polyisocyanate geeignet. Beispiele hierfür sind Carbodiimidgruppen aufweisende Polyisocyanate, wie sie in der DE-A-1 092 007 beschrieben werden, Allophanatgruppen aufweisende Polyisocyanate, wie sie z.B. in der GB-A-994 890, der BE-A-761 626 beschrieben werden, Isocyanuratgruppen aufweisende Polyisocyanate, wie sie z.B. in der US-A-4 288 586, in den DE-B-1 022 789, 1 222 067 und 1 027 394, in den DE-A-1 929 034, 2 004 048 und 2 839 133 oder in der EP-B-10 589 beschrieben werden, Urethangruppen aufweisende Polyisocyanate, wie sie z.B. in der BE-A-752 261 oder in der US-A-3 394 164 beschrieben werden, acylierte Harnstoffgruppen aufweisende Polyisocyanate gemäss der DE-B-1 230 778, Biurethangruppen aufweisende Polyisocyanate, wie sie z.B. in der DE-B-1 101 394 in der GB-A-889 050 und in der FR-B-7 017 514 beschrieben werden.

Besonders gut für das erfindungsgemässe Verfahren geeignete Polyisocyanate sind die an sich bekannten «Lackpolyisocyanate», d.h. Biuret-, Isocyanurat- oder Urethangruppen-aufweisende Modifizierungsprodukte der obengenannten einfachen Polyisocyanate insbesondere Tris-(6-Isocyanatohexyl)-biuret, gegebenenfalls im Gemisch mit seinen höheren Homologen, durch Trimerisierung von aliphatischen und/oder aromatischen Diisocyanaten wie z.B. Hexamethylendiisocyanat, Isophorondiisocyanat, Diisocyanato-toluol oder Gemischen aus Diisocyanatotoluol und Hexamethylendiisocyanat erhältliche, Isocyanuratgruppen-aufweisende Polyisocyanate, vor allem, das gegebenenfalls im Gemisch mit seinen höheren Homologen vorliegende Tris-(6-isocyanatohexyl)-isocyanurat oder niedermolekulare, Urethangruppen-aufweisende Polyisocyanate, wie sie beispielsweise durch Umsetzung von überschüssigen Mengen an 2,4-Diisocyanatotoluol mit einfachen mehrwertigen Alkoholen des Molekulargewichtsbereichs 62-300, insbesondere mit Trimethylolpropan und anschliessende destillative Entfernung des nicht umgesetzten Diisocyanatüberschusses erhalten werden können. Selbstverständlich können auch beliebige Gemische der beispielhaft genannten Polyisocyanate zur Herstellung der erfindungsgemässen Produkte eingesetzt werden.

Weiterhin für das erfindungsgemässe Verfahren gut geeignete Polyisocyanate sind die bekannten, endständige Isocyanatgruppen aufweisende Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere insgesamt mindestens zwei Aminogruppen, Thiolgruppen, Carboxylgruppen, und/oder Hydroxylgruppen aufweisende Verbindungen des Molekulargewichtsbereichs 300 bis 10000, vorzugsweise 400 bis 6000 zur Anwendung. Bevorzugt werden die entsprechenden Polyhydroxylverbindungen verwendet.

Vorzugsweise einzusetzende Hydroxylverbindungen sind die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide.

Vertreter der genannten, zur Herstellung der erfindungsgemäss geeigneten NCO-Prepolymere zu verwendenden Polyisocyanat- und Hydroxyl-Verbindungen sind z.B. in High Polymers, Vol. XVI, «Polyurethanes, Chemistry and Technology», verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, beschrieben.

Bei der Herstellung der NCO-Prepolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO reaktiven Wasserstoffatomen, vorzugsweise aus Hydroxylgruppen, von 1,05 bis 10, vorzugsweise von 1,1 bis 3, entsprechen.

Die Art und Mengenverhältnisse der bei der Herstellung der NCO-Prepolymeren eingesetzten Ausgangsmaterialien werden im übrigen vorzugsweise so gewählt, dass die NCO-Prepolymeren

a) eine mittlere NCO-Funktionalität von 2 bis 4, vorzugsweise von 2 bis 3,

b) ein mittleres, aus der Stöchiometrie der Ausgangsmaterialien errechenbares Molekulargewicht von 500 bis 10000, vorzugsweise von 800 bis 4000

aufweisen.

Reaktionspartner für die beispielhaft genannten organischen Polyisocyanate sind beim erfindungsgemässen Verfahren Verbindungen der Formel

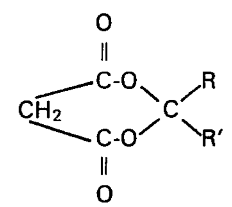

für welche

R und R' für gleiche oder verschiedene Reste stehen und Alkylreste mit 1 bis 4 Kohlenstoffatomen, insbesondere Methylreste bedeuten oder in denen die Reste R und R' zusammen mit dem, mit den Sauerstoffatomen verknüpften Kohlenstoffatom einen cycloaliphatischen Ring mit 5 bis 6, insbesondere 6 Kohlenstoffatomen bilden.

Besonders bevorzugt ist der bekannteste Vertreter dieser Produktklasse, das Isopropyliden-malonat, auch Meldrum-Säure genannt ($R = R' = CH_3$). Die Verbindung ist durch Kondensation von Malonsäure mit Aceton unter saurer Katalyse erhältlich [vgl. A.N. Meldrum, J. Chem. Soc. 90, 598 (1908); D. Davidson et al., J. Amer. Chem. Soc. 70, (3429 (1948)]. Entsprechend können die anderen erfindungsgemäss geeigneten cyclischen Dicarbonylverbindungen durch Kondensation aus Malonsäure und Ketonen der Formel

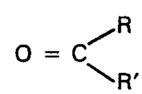

hergestellt werden, wobei

R und R' die bereits obengenannte Bedeutung bzw. bevorzugte Bedeutung hat.

So wären beispielsweise Methyl-ethylketon, Methyl-isobutylketon, Cyclopentanon oder Cyclohexanon geeignete Reaktionspartner für die Malonsäure bei der Herstellung der erfindungsgemäss als Blockierungsmittel geeigneten, cyclischen Dicarbonylverbindungen.

Entsprechende Syntheseverfahren sind z.B. von B. Eistert et al., in Chem. Ber. 94, 929 (1961); von J. Swoboda et. al. in Monatsh. 91, 188 (1960) oder von A. Michael et al, in J. Amer. Chem. Soc. 58, 680 (1936) beschrieben worden.

Zur Herstellung der erfindungsgemässen blockierten Polyisocyanate werden die oben im einzelnen beschriebenen Komponenten, d.h. die organischen

Polyisocyanate und die cyclischen Dicarbonylverbindungen miteinander zur Reaktion gebracht. Dabei werden die erfindungsgemässen cyclischen Dicarbonylverbindungen in Mengen eingesetzt, die mindestens 10 Äquivalent-%, bezogen auf die NCO-Gruppen der Polyisocyanate entsprechen. Dies bedeutet, dass die Reaktionspartner bei der Durchführung des erfindungsgemässen Verfahrens in, einem Molverhältnis von cyclischen Dicarbonylverbindungen zu Isocyanatgruppen des Ausgangspolyisocyanats von mindestens 0,1 : 1 entsprechenden Mengen zum Einsatz gelangen. Vorzugsweise werden solche Mengen an cyclischen Dicarbonylverbindungen eingesetzt, dass 30-100% der Isocyanatgruppen damit abreagieren, d.h. die Ausgangsmaterialien kommen vorzugsweise in, einem Molverhältnis von cyclischen Dicarbonylverbindungen zu Isocyanatgruppen des Ausgangspolyisocyanats von 0,3 : 1 bis 1 : 1 entsprechenden Mengen zum Einsatz. Grundsätzlich ist es jedoch auch möglich, zur Beschleunigung und Vervollständigung der Umsetzung auch überschüssige Mengen an cyclischer Dicarbonylverbindung einzusetzen. Im allgemeinen wird jedoch ein derartiger Überschuss 10 bis 20 Äquivalent-%, bezogen auf die Isocyanatgruppen des Ausgangspolyisocyanats nicht übersteigen.

Im Falle, dass die cyclischen Dicarbonylverbindungen molmässig im Unterschuss gegenüber den NCO-Gruppen der Polyisocyanate eingesetzt werden, lässt man vorzugsweise die überschüssigen Isocyanatgruppen mit anderen monofunktionellen Blockierungsmitteln abreagieren. Dazu eignen sich beliebige Isocyanat-Blockierungsmittel, wie sie z.B. bei Z.W. Wicks, Jr., Progress in Organic Coatings 9, 3-28 (1981) beschrieben sind. Beispiele derartiger mitzuverwendender Blockierungsmittel sind: C-H-acide Verbindungen, wie z.B. Malonsäuredialkylester und Acetessigsäurealkylester, Oxime, wie z.B. Acetonoxim, Methylethylketonoxim und Acetaldoxim, Lactame, wie z.B. ε-Caprolactam, Phenole, wie Phenol selbst oder dessen Alkylderivate. Derartige Blockierungsmittel werden beim erfindungsgemässen Verfahren, falls überhaupt, maximal in einer, einem Molverhältnis von Blockierungsmittel zu Isocyanatgruppen des Ausgangspolyisocyanats von 0,9 : 1 entsprechenden Menge mitverwendet.

Es ist aber auch ohne weiteres möglich, die cyclischen Dicarbonylverbindungen molmässig im Unterschuss gegenüber den NCO-Gruppen der Polyisocyanate einzusetzen und die nach der Reaktion verbleibenden NCO-Gruppen frei zu lassen, so dass diese für weitere Reaktionen, z.B. mit Kettenverlängerungsmitteln, Wasser oder Zerewitinow-aktive Wasserstoffatome tragenden Polymeren zur Verfügung stehen.

Die Reaktion zwischen den erfindungsgemäss geeigneten cyclischen Dicarbonylverbindungen und den Polyisocyanaten wird im allgemeinen bei Temperaturen von 0°C bis 80°C, vorzugsweise von 20°C bis 60°C durchgeführt. Wenn, wie beschrieben, ein Teil der Isocyanatgruppen mit anderen Blockierungsmitteln umgesetzt werden soll, so kann die Reaktion mit diesen Blockierungsmitteln vor oder nach der Umsetzung mit der cyclischen Dicarbonylverbindung oder auch gleichzeitig mit dieser erfolgen.

Zur Beschleunigung der Reaktion können in an sich bekannter Weise Basen, vorzugsweise organische Basen, besonders bevorzugt tertiäre Amine mitverwendet werden. Wie unten näher ausgeführt, werden diese Basen vorzugsweise in einer Menge von 50-100 Mol.-%, bezogen auf die Menge an cyclischen Dicarbonylverbindungen eingesetzt. Dadurch resultieren blockierte Polyisocyanate, die den erfindungsgemässen Vorteil aufweisen, direkt, d.h. ohne weitere Modifizierung auch in Wasser löslich oder dispergierbar zu sein. Die Reaktion wird vorzugsweise in einem organischen Lösungsmittel durchgeführt, obwohl sie prinzipiell, z.B. bei Einsatz besonders niedrigviskoser Polyisocyanate, auch ohne Lösungsmittel möglich ist. Als Lösungsmittel eignen sich z.B. Ethylenglykolethyletheracetat, Propylenglykolmethyletheracetat, Butylacetat, Aceton, Methylethylketon, Cyclohexanon, N,N-Dimethylformamid und N-Methylpyrrolidon.

Vorzugsweise werden organische Lösungsmittel mitverwendet, die zugleich wasserlöslich sind. Dies ermöglicht eine besonders einfache Dispergierung der Produkte für den Fall, dass die blockierten Polyisocyanate in Form wässriger Lösungen oder Dispersionen eingesetzt werden sollen. Besonders bevorzugt als derartiges Lösungsmittel ist N-Methylpyrrolidon. Die organischen Lösungsmittel werden im allgemeinen in einer Menge von 5-50%, vorzugsweise 10-30%, bezogen auf das Gesamtgemisch eingesetzt.

Wie bereits erwähnt, weisen die erfindungsgemässen Verfahrensprodukte die interessante Eigenschaft auf, in Gegenwart von beliebigen tertiären Aminen in Wasser löslich bzw. dispergierbar zu sein. Geeignete tertiäre Amine sind beliebige organische Verbindungen, die mindestens ein tert.-Stickstoffatom aufweisen, und die vorzugsweise ein Molekulargewicht von 59 bis 300 besitzen. Einwertige tert.-Amine sind bevorzugt. Geeignete tert.-Amine sind z.B. Trimethylamin, Triethylamin, N,N-Dimethylbenzylamin oder N,N-Dimethylethanolamin.

Die Art der Wechselwirkung der erfindungsgemäss blockierten Polyisocyanate mit den Aminen ist nicht genau bekannt. Vermutlich ist dieses überraschende Phänomen darauf zurückzuführen, dass die erfindungsgemäss mit cyclischen Dicarbonylverbindungen blockierten Isocyanatgruppen acide Wasserstoffatome aufweisen, d.h. einbasische Säuren darstellen, die mit den Aminen zur Bildung von Ammoniumsalzen befähigt sind. Im allgemeinen ist die Löslichkeit bzw. Dispergierbarkeit der erfindungsgemässen Verfahrensprodukte dann gegeben, wenn sie einen Gehalt an «neutralisierten», mit cyclischen Dicarbonylverbindungen blockierten Isocyanatgruppen von mindestens 80, vorzugsweise 110 bis 300 Milliäquivalenten pro 100 g Festkörper, inclusive der Amine aufweisen. Die Teilchengrösse der in wässriger Phase gelösten bzw. dispergierten Festkörper hängt in erster Linie vom Gehalt derartiger ionischer Struktureinheiten ab.

Vorzugsweise werden die tertiären Amine, wie oben erwähnt, schon bei der Herstellung der erfindungsgemässen blockierten Polyisocyanate zugegeben, wobei sie gleichzeitig als Katalysatoren wirken. Wenn basenfreie oder basenarme blockierte Polyisocyanate der genannten Art in Wasser dispergiert werden sollen, ist es jedoch möglich, die tert.-Amine erst unmittelbar vor oder auch während der Dispergierung, z.B. durch Zusatz der Basen zum Dispergierwasser, zuzugeben. Die Dispergierung der erfindungsgemässen Produkte kann sowohl durch Eintragen in die wässrige Phase als auch umgekehrt durch Einrühren der wässrigen Phase in die Lösung oder Schmelze der blockierten Polyisocyanate oder auch durch kontinuierliches Vermischen der beiden Phasen in geeigneten Mischaggregaten erfolgen. Ist z.B. aus Viskositätsgründen die Mitverwendung organischer Lösungsmittel bei der Auflösung der Dispergierung der Produkte nötig und sollen dennoch lösungsmittelfreie wässrige Dispersionen oder Lösungen der blockierten Polyisocyanate erhalten werden, so kann man als Lösungsmittel in bekannter Weise solche mit genügend niedrigem Siedepunkt, wie z.B. Aceton wählen, die nach der Dispergierung abdestilliert werden können. Man benutzt für die Dispergierung im allgemeinen so viel Wasser, dass die Dispersionen einen möglichst hohen Festkörperanteil aufweisen. In der Regel lassen sich Lösungen oder Dispersionen mit 30-60% Festkörper sehr gut herstellen.

Zur Herstellung von wässrigen Lösungen oder Dispersionen der erfindungsgemässen Verfahrensprodukte werden vorzugsweise solche ausgewählt, die keine freien Isocyanatgruppen mehr aufweisen, d.h. deren Isocyanatgruppen vollständig mit erfindungswesentlichen und gegebenenfalls den beispielhaft genannten «klassischen» Blockierungsmitteln blockiert sind. Grundsätzlich wäre es jedoch auch denkbar, wässrige Lösungen bzw. Dispersionen von freie Isocyanatgruppen aufweisenden erfindungsgemässen Verfahrensprodukten herzustellen, was jedoch selbstverständlich auf eine Vernichtung dieser freien Isocyanatgruppen gegebenenfalls unter Kettenverlängerung unter Harnstoffbildung hinauslaufen würde.

Die erfindungsgemässen Verfahrensprodukte eignen sich insbesondere als Reaktionspartner für Verbindungen mit gegenüber Isocyanatgruppen reaktionsfähigen Wasserstoffatomen bei der Herstellung von hochmolekularen Isocyanat-Polyadditionsprodukten. Hierzu als Reaktionspartner für die erfindungsgemässen Verfahrensprodukte geeignete Reaktionspartner sind die aus der Polyurethanchemie bekannten, mindestens zwei gegenüber Isocyanatgruppen reaktionsfähige Gruppen aufweisenden Verbindungen des Molekulargewichtsbereichs 60 bis 10000, vorzugsweise 400 bis 6000. Es handelt sich hierbei insbesondere um mindestens zwei alkoholische Hydroxylgruppen, Carboxylgruppen, Aminogruppen und/oder Thiolgruppen aufweisende Verbindungen. Die entsprechenden Polyhydroxylverbindungen stellen die bevorzugten Reaktionspartner für die erfindungsgemässen Verfahrensprodukte dar. Beispiele hierfür sind die bekannten Polyhydroxypolyester, -polyether, -polythioether, -polyacetale, -polycarbonate oder -polyesteramide, wie sie in den bereits oben zitierten Literaturstellen «High Polymers» oder «Kunststoff-Handbuch» beispielhaft erwähnt sind. Gut geeignete Reaktionspartner sind auch die bekannten Polyhydroxylpolyacrylate oder mindestens zwei Hydroxylgruppen aufweisende Oligourethane des obengenannten Molekulargewichtsbereichs, wie sie durch Umsetzung überschüssiger Mengen an Polyhydroxylverbindungen mit Polyisocyanaten der oben beispielhaft genannten Art zugänglich sind. Auch Epoxidharze vom Glycidylether-Typ, wie sie beispielsweise durch Umsetzung von Bisphenol A mit überschüssigen Mengen an Epichlorhydrin erhältlich sind, sind geeignete Reaktionspartner für die erfindungsgemässen Verfahrensprodukte. Besonders bevorzugte Reaktionspartner für die erfindungsgemässen Verfahrensprodukte sind die beispielhaft genannten Polyhydroxypolyester, -polyether, -polyacrylate und -oligourethane sowie die aus der Polyurethanchemie an sich bekannten niedermolekularen, mindestens zwei Hydroxylgruppen aufweisende Kettenverlängerungsmittel bzw. Vernetzer des Molekulargewichtsbereichs 62-300 wie z.B. Ethylenglykol, Tetramethylenglykol, Butandiol-1,2, Hexamethylenglykol, Glycerin oder Trimethylolpropan. Selbstverständlich können beliebige Gemische derartiger Verbindungen mit gegenüber Isocyanatgruppen reaktionsfähigen Gruppen bei der erfindungsgemässen Verwendung der erfindungsgemässen Verfahrensprodukte zur Herstellung von Isocyanat-Polyadditionsprodukten, insbesondere Polyurethanen eingesetzt werden.

Bei dieser erfindungsgemässen Verwendung der erfindungsgemässen Verfahrensprodukte werden die Reaktionspartner in, einem Äquivalentverhältnis von blockierten Isocyanatgruppen zu gegenüber Isocyanatgruppen reaktionsfähigen Gruppen von 0,1 : 1 bis 1 : 1,2, vorzugsweise von 0,3 : 1 bis 1 : 1 und, einem Äquivalentverhältnis von freien und blockierten Isocyanatgruppen zu gegenüber Isocyanatgruppen reaktionsfähigen Gruppen von 0,8 : 1 bis 1 : 1,2, vorzugsweise 1 : 1 entsprechenden Mengen miteinander vermischt, wobei die gegebenenfalls vorliegenden freien Isocyanatgruppen mit einem Teil der gegenüber Isocyanatgruppen reaktionsfähigen Gruppen spontan unter Bildung oligomerer Kunststoffvorläufer abreagiert, während die Reaktion zwischen den blockierten Isocyanatgruppen und dem gegenüber Isocyanatgruppen reaktionsfähigen Gruppen erst unter Hitzeeinwirkung beispielsweise im Temperaturbereich von 80-250°C, vorzugsweise von 100 bis 180°C stattfindet. Die Vermischung der Reaktionspartner kann in Gegenwart organischer Lösungsmittel der bereits oben beispielhaft genannten Art erfolgen. Derartige Lösungen können beispielsweise als hitzevernetzbare Klarlacke oder zur Herstellung von pigmentierten Lacken verwendet werden.

Eine weitere mögliche Verwendung der erfindungsgemässen Verfahrensprodukte besteht in der Herstellung von wässrigen Einbrennlacken, wobei wässrige Lösungen oder Dispersionen von Verbindungen mit gegenüber Isocyanatgruppen reaktionsfähigen Gruppen mit wasserlöslichen bzw. -dispergierbaren erfindungsgemässen Verfahrensprodukten der obengenannten Art kombiniert werden.

Auch hierzu werden vorzugsweise entsprechend den oben gemachten Ausführungen solche erfindungsgemässen Verfahrensprodukte eingesetzt, die ausschliesslich blockierte Isocyanatgruppen aufweisen, wobei hier vorzugsweise das Äquivalentverhältnis von blockierten Isocyanatgruppen zu gegenüber Isocyanatgruppen reaktionsfähigen Gruppen bei 0,1 : 1 bis 1 : 1,2, vorzugsweise 0,8 : 1 bis 1 : 1,1 liegt. Die Herstellung derartiger wässriger Lösungen oder Dispersionen kann gut in der Weise erfolgen, dass man die in Wasser löslichen oder dispergierbaren erfindungsgemässen Verfahrensprodukte mit vorab hergestellten wässrigen Lösungen oder Dispersionen der aktiven Wasserstoff enthaltenden Verbindungen vermischt. Ebenso ist es möglich, wie oben beschrieben zunächst eine wässrige Lösung oder Dispersion der erfindungsgemässen Verfahrenssprodukte herzustellen und diese dann mit getrennt hergestellten wässrigen Lösungen oder Dispersionen der Verbindungen mit gegenüber Isocyanatgruppen reaktionsfähigen Gruppen zu vermischen. In beiden Fällen ist es selbstverständlich erforderlich, dass die Verbindungen mit gegenüber Isocyanatgruppen reaktionsfähigen Gruppen, falls sie nicht wasserlöslich oder dispergierbar sind, z.B. mit Hilfe von externen Emulgatoren oder vorzugsweise durch Einbau von hydrophilen Gruppierungen wie z.B. Carboxylat- oder Sulfonatgruppen so zu modifieren, dass die Verbindungen in Wasser löslich bzw. dispergierbar sind. Besonders gut geeignete derartige Verbindungen sind Carboxyl und Hydroxylgruppen enthaltende Polyacrylate oder Oligourethane des obengenannten Molekulargewichtsbereichs, deren Carboxylgruppen beispielsweise mit tert.-Aminen der oben beispielhaft genannten Art in hydrophile Carboxylatgruppen überführbar sind.

Grundsätzlich ist es auch denkbar, die unneutralisierten erfindungsgemässen Verfahrensprodukte mit wässrigen Lösungen von organischen Polyaminen, insbesondere Diaminen mit primären oder sekundären Aminogruppen wie z.B. Ethylendiamin, Diethylentriamin, Hexamethylendiamin oder Isophorondiamin zu vermischen, wobei die primären bzw. sekundären Aminogruppen die Doppelfunktion eines Neutralisationsmittels für die erfindungsgemäss blockierten Isocyanatgruppen unter Gewährleistung ihrer Wasserlöslichkeit bzw. -dispergierbarkeit und eines Reaktionspartners für die blockierten und freien Isocyanatgruppen der erfindungsgemässen Verfahrensprodukte übernehmen, so dass ebenfalls wässrige Lösungen oder Dispersionen von unter dem Einfluss von Hitze vernetzbaren Systemen entstehen. Diese prinzipiell denkbare Verwendung der erfindungsgemässen Verfahrensprodukte ist jedoch weniger bevorzugt.

Die Kombinationen aus erfindungsgemäss hergestellten Verfahrensprodukten und Verbindungen mit gegenüber Isocyanatgruppen reaktionsfähigen Gruppen sind sowohl in Form organischer Lösungen als auch in Form wässriger Dispersionen oder Lösungen bei Raumtemperatur auch bei längerer Lagerung stabil gegen Gelierung, Koagulation oder Sedimentation. Sie eignen sich in ausgezeichneter Weise zur Herstellung von Kunststoffen, insbesondere von Überzügen und Dichtungsmassen auf einer Vielzahl von Substraten wie z.B. von Textilien, Leder, Glasfasern, Konststoffen, keramischen Materialien, Glas und Holz. Besonders gut eignen sich die Kombinationen jedoch als Einbrennlacke für hitzeresistente Substrate, insbesondere für Metalle.

Zur Herstellung der Überzüge werden die Substrate mit den erfindungsgemässen Kombinationen, die gegebenenfalls mit den in der Lacktechnologie üblichen Hilfsstoffen, wie z.B. Pigmenten, Füllstoffen oder Verlaufshilfsmitteln vermischt sein können, nach den üblichen Methoden, beispielsweise durch Spritzen, Streichen oder Tauchen, beschichtet. Die thermische Aushärtung erfolgt im allgemeinen im Temperaturbereich von 80-250°C, vorzugsweise von 100 bis 180°C, wobei die Entfernung etwaiger Lösungsmittel oder des Wassers durch Verdunsten oder Verdampfen vor oder während dieser Hitzebehandlung stattfindet.

Die nachstehenden Beispiele dienen zur weiteren Erläuterung der Erfindung. Alle Prozentangaben beziehen sich, soweit nicht anders vermerkt, auf Gewichtsprozente.

*Beispiel 1*

In eine Mischung aus 400 g eines durch Trimerisierung von Hexamethylendiisocyanat erhaltenen Isocyanurat-Polyisocyanats (NCO-Gehalt 21%), 300 g Isopropylidenmalonat (Meldrum-Säure) und 300 g N-Methylpyrrolidon wird 208 g Triethylamin unter Rühren eingetropft. Man rührt 8 Stunden bei 50°C nach, bis IR-spektroskopisch keine NCO-Gruppen mehr nachweisbar sind. Das Produkt hat eine Viskosität von 20000 mPas (23°C), einen Gehalt an blockierten NCO-Gruppen von 7,0%, einen Gehalt an neutralisierten blockierten Isocyanatgruppen von 229 Milliäquivalenten pro 100 g und weist gute Wasserlöslichkeit auf.

*Beispiel 2*

Aus 60 g des blockierten Polyisocyanats gemäss Beispiel 1 und 50 g einer 75%igen Lösung eines OH-funktionellen Lackpolyesters in Ethylglykolacetat («Polyesterharz A», hergestellt aus 29,6% Isophthalsäure; 10,1% Adipinsäure; 5,9% o-Phthalsäure, 42,4% Hexandiol-1,6; 12,0% Trimethylolpropan; OH-Zahl 150) wird ein Klarlack hergestellt. Das Äquivalentverhältnis zwischen blockierten Isocyanatgruppen und Hydroxylgruppen liegt bei 1 : 1.

Der Lack wird auf eine Glasplatte aufgetragen (Nassfilmdicke: 120 µm) und 30 min bei 140°C eingebrannt. Man erhält einen elastischen Lackfilm mit trockener Oberfläche und guter Lösungsmittelfestigkeit (siehe Tabelle 1).

*Beispiel 3*

60 g des blockierten Polyisocyanats gemäss Beispiel 1 werden unter gutem Rühren zu 263 g einer 30%igen wässrigen Dispersion eines OH-funktionellen Polyurethanharzes gegeben. Die Dispersion dieses Harzes («Polyurethanharz B») wurde aus folgenden Ausgangsmaterialien hergestellt; 15,0% Polyesterdiol aus Neopentylglykol und Hexahydrophthalsäure, OH-Zahl 192; 3,2% Polyesterdiol aus Hexandiol-1,6 und Adipinsäure, OH-Zahl 133; 0,77% Trimethylolpropan; 2,56% Dimethylolpropionsäure; 8,47% Isophorondiisocyanat; 2,6% Dimethylbenzylamin; 0,4% Triethylamin; 67,0% Wasser. Die OH-Zahl des OH-funktionellen Polyurethanharzes, bezogen auf Feststoff, ohne Amine, beträgt 71,2. Das Äquivalentverhältnis von blockierten

Isocyanatgruppen zu Hydroxylgruppen des Harzes liegt bei 1 : 1.

Das blockierte Isocyanat löst sich glatt und vollständig. Es entsteht eine feinteilige und lagerstabile wässrige Einbrennlack-Dispersion. Diese wird auf Glasplatten aufgetragen (Nassfilmdicke: 120 µm) und 30 min bei 140°C und 160°C eingebrannt. Man erhält elastische Lackfilme mit trockener Oberfläche und guter Lösungsmittelfestigkeit (siehe Tabelle 1).

TABELLE 1

| | Lackfilm-Eigenschaften | | | | |
|---|---|---|---|---|---|
| | Beispiel 2 | Polyesterharz A | Beispiel 3 | | Polyurethanharz B |
| Einbrenntemperatur | 140°C | 140°C | 140°C | 160°C | 160°C |
| Oberfläche [1] | 0 | 5 | 0 | 0 | 0 |
| Elastizität (span) [2] | 2 | 0 | 2-3 | 2-3 | 5 |
| Lösungsmittelbeständigkeit [3] (Wattebausch 1 min/5 min) | | | | | |
| Toluol | 1/4 | 5 | 0/1 | 0/0 | 3/5 |
| Ethylglykolacetat | 1/4 | 5 | 0/1 | 0/0 | 5 |
| Aceton | 4 | 5 | 4 | 4 | 5 |

*Erläuterungen*

[1] 0 = trocken 5 = klebrig

[2] 0 = sehr weich 2 = elastisch 5 = sehr spröde

[3] 0 = Lack unverändert 3 = gequollen 5 = aufgelöst.

Die Prüfung der Lösungsmittelbeständigkeit erfolgte durch Auflegen eines mit dem Lösungsmittel getränkten Wattebauschs. Die Angaben nur einer Zahl bedeutet, dass der Wattebausch während eines Zeitraums von 1 min aufgelegt war. Bei Angabe von zwei Zahlen bezieht sich die erste Zahl auf ein 1minütiges und die zweite Zahl auf ein 5minütiges Auflegen des Wattebauschs.

*Beispiel 4*

Zu einer Mischung aus 400 g eines durch Trimerisierung von Hexamethylendiisocyanat erhaltenen Isocyanurat-Polyisocyanats (NCO-Gehalt: 21%), 128 g Malonsäurediethylester und 300 g N-Methylpyrrolidon wird 2,5 g Natriumphenolat gegeben. Man rührt bei 60°C, bis der berechnete Gehalt an freien NCO-Gruppen von 6% knapp unterschritten ist. Nach Abkühlen auf 30°C gibt man 173 g Isopropylidenmalonat und dann tropfenweise 121 g Triethylamin zu. Nach dem Abklingen der exothermen Reaktion wird 8 Stunden bei 50°C gerührt, bis IR-spektroskopisch keine NCO-Gruppen mehr nachweisbar sind. Das Produkt hat eine Viskosität von 11000 mPas (23°C), einen Gehalt an blockierten NCO-Gruppen von 75%, einen Gehalt an neutralisierten Isopropylidenmalonat-blockierten Isocyanatgruppen von 146 Milliäquivalenten pro 100 g und weist eine gute Wasserlöslichkeit auf.

*Beispiel 5*

Aus 56 g des blockierten Polyisocyanats gemäss Beispiel 4 und 50 g einer 75%igen Ethylglykolacetat-Lösung des in Beispiel 2 beschriebenen Polyesterharzes A wird ein Klarlack hergestellt. Er wird auf eine Glasplatte aufgetragen (Nassfilmdicke: 120 µm) und 30 min bei 140°C eingebrannt. Das Äquivalentverhältnis zwischen blockierten Isocyanatgruppen und Hydroxylgruppen liegt bei 1 : 1. Man erhält einen elastischen Lackfilm mit trockener Oberfläche und guter Lösungsmittelfestigkeit (siehe Tabelle 2).

*Beispiel 6*

56 g des blockierten Polyisocyanats gemäss Beispiel 4 werden unter gutem Rühren zu 263 g einer 30%igen wässrigen Dispersion des in Beispiel 3 beschriebenen Polyurethanharzes B gegeben. Das blockierte Polyisocyanat löst sich glatt und vollständig. Das Äquivalentverhältnis von blockierten Isocyanatgruppen zu Hydroxylgruppen liegt bei 1 : 1. Es entsteht eine feinteilige und lagerstabile wässrige Einbrennlack-Dispersion, die auf Glasplatten aufgetragen (Nassfilmdicke: 120 µm) und 30 min bei 140°C und 160°C eingebrannt wird. Man erhält elastische Lackfilme mit trockener Oberfläche und guter Lösungsmittelfestigkeit (siehe Tabelle 2).

TABELLE 2

| | Lackfilm-Eigenschaften | | | | |
|---|---|---|---|---|---|
| | Beispiel 5 | Polyesterharz A | Beispiel 6 | | Polyurethanharz B |
| Einbrenntemperatur | 140°C | 140°C | 140°C | 160°C | 160°C |
| Oberfläche [1)] | 0 | 5 | 0 | 0 | 0 |
| Elastizität (span) [2)] | 2 | 0 | 2-3 | 2-3 | 5 |
| Lösungsmittelbeständigkeit [3)] (Wattebausch 1 min/5 min) | | | | | |
| Toluol | 1 | 5 | 0/4 | 0/2 | 3/5 |
| Ethylglykolacetat | 0/2 | 5 | 2/4 | 0/4 | 5 |
| Aceton | 3 | 5 | 4 | 4 | 5 |

*Erläuterungen:* siehe Tabelle 1

*Beispiel 7*

Zu einer Mischung aus 372 g eines Biuretgruppen aufweisenden Polyisocyanats auf Basis von Hexamethylendiisocyanat (NCO-Gehalt: 22,6%) und 300 g N-Methylpyrrolidon gibt man tropfenweise 70 g Butanonoxim. Man rührt 3 Stunden bei 50°C nach, kühlt auf 30°C ab und gibt 173 g Isopropylidenmalonat zu. Anschliessend werden 121 g Triethylamin zugetropft. Nach dem Abklingen der exothermen Reaktion wird 8 Stunden bei 50°C nachgerührt, bis IR-spektroskopisch keine NCO-Gruppen mehr nachweisbar sind. Das erhaltene Produkt hat eine Viskosität von 6000 mPas (23°C), einen Gehalt an blockierten NCO-Gruppen von 8,1%, einen Gehalt an neutralisierten Isopropylidenmalonat-blockierten Isocyanatgruppen von 163 Milliäquivalenten pro 100 g und ist wasserlöslich.

Ein analog Beispiel 2 aus diesem blockierten Polyisocyanat und dem Polyesterharz A hergestellter Lack (blockiertes NCO : OH = 1) ist nach Einbrennen (30 min/140°C) trocken, elastisch und zeigt gute Wasser- und Lösungsmittelbeständigkeit.

*Beispiel 8*

Ein Gemisch aus 400 g eines durch Trimerisierung von Hexamethylendiisocyanat erhaltenen Isocyanurat-Polyisocyanats (NCO-Gehalt: 21%), 300 g N-Methylpyrrolidon und 90,4 g ε-Caprolactam wird bei 60°C gerührt, bis der berechnete NCO-Gehalt von 6,4% knapp unterschritten ist. Zu dieser Lösung werden 173 g Isopropylidenmalonat gegeben. Anschliessend tropft man 121 g Triethylamin zu. Nach dem Abklingen der exothermen Reaktion wird 8 Stunden bei 50°C nachgerührt, bis IR-spektroskopisch keine NCO-Gruppen mehr nachweisbar sind. Das Produkt hat eine Viskosität von 8500 mPas (23°C), einen Gehalt an blockierten NCO-Gruppen von 7,7%, einen Gehalt an neutralisierten Isopropylidenmalonat-blockierten Isocyanatgruppen von 153 Milliäquivalenten pro 100 g und weist gute Wasserlöslichkeit auf.

Ein analog Beispiel 2 aus diesem blockierten Polyisocyanat und dem Polyesterharz A hergestellter Lack (blockiertes NCO : OH = 1) ist nach Einbrennen (30 min/160°C) trocken, elastisch und zeigt gute Wasser- und Lösungsmittelbeständigkeit.

*Beispiel 9*

Zu einer Mischung von 100 g eines durch Trimerisierung von Hexamethylendiisocyanat erhaltenen Isocyanurat-Polyisocyanats (NCO-Gehalt: 21%), 92 g Cyclohexylidenmalonat und 75 g-Methylpyrrolidon gibt man tropfenweise 50 g Triethylamin zu. Es wird 8 Stunden bei 50°C nachgerührt, bis IR-spektroskopisch keine NCO-Gruppen mehr nachweisbar sind. Das Produkt hat eine Viskosität von 150000 mPas (23°C), einen blockierten NCO-Gehalt von 6,6%, einen Gehalt an neutralisierten Cyclohexylidenmalonat-blockierten Isocyanatgruppen von 208 Milliäquivalenten pro 100 g und ist wasserlöslich.

Ein analog Beispiel 2 aus diesem blockierten Polyisocyanat und dem Polyesterharz A hergestellter Lack (blockiertes NCO : OH = 1) ist nach Einbrennen (30 min/140°C) elastisch, klebfrei und wasser- und lösungsmittelbeständig.

*Beispiel 10*

Es wird ein blockiertes Polyisocyanat hergestellt wie in Beispiel 9 beschrieben, mit dem Unterschied, dass anstelle des Cyclohexylidenmalonats 85 g Cyclopentylidenmalonat eingesetzt werden. Das erhaltene Produkt hat eine Viskosität von 135000 mPas (23°C), einen blockierten NCO-Gehalt von 6,8% und ist wasserlöslich. Ein analog Beispiel 9 hergestellter Lack zeigt vergleichbare Eigenschaften.

*Beispiel 11*

Zu 522 g Diisocyanatotoluol (Isomerengemisch 2,4 : 2,6 = 80 : 20) gibt man unter Kühlung tropfenweise eine Lösung von 134 g Trimethylolpropan in 437 g N-Methylpyrrolidon. Nach Abklingen der exothermen Reaktion wird die Mischung bei 60°C nachgerührt, bis der berechnete NCO-Gehalt von 11,5% knapp unterschritten ist.

300 g dieses Addukts werden bei Raumtemperatur vorgelegt und mit 40 g N-Methylpyrrolidon und 116 g Isopropylidenmalonat versetzt. Zu dieser Mischung gibt man langsam 81 g Triethylamin und rührt 4 Stunden bei 50°C nach, bis IR-Spektroskopisch keine NCO-Gruppen mehr nachweisbar sind. Dann gibt man 500 g Wasser zu. Es entsteht

eine klare, gelbliche Lösung, die tropfenweise mit 135 g 6 N HCl versetzt wird. Dabei fällt das basenfreie blockierte Isocyanat in Form eines hellen Niederschlags aus. Dieser wird abfiltriert, mit Wasser gewaschen und im Vakuum getrocknet.

Ausbeute: 284 g (96 der Theorie)

Schwach gelbes Pulver, Schmelzpunkt: 92 bis 95°C.

*Beispiel 12*

37 g des festen blockierten Polyisocyanats gemäss Beispiel 11 werden unter Rühren in ein Gemisch aus 76 g Wasser und 10,1 g Triethylamin eingetragen. Es entsteht eine feinteilige lagerstabile wässrige Dispersion, die frei von organischen Cosolventien ist. Der dispergierte Festkörper weist einen Gehalt an neutralisierten Isopropylidenmalonatblockierten Isocyanatgruppen von 212 Milliäquivalenten pro 100 g auf. Durch Vermischen mit 263 g der 30%igen wässrigen Dispersion des in Beispiel 3 beschriebenen Polyurethanharzes B erhält man einen wässrigen Einbrennlack, aus dem sich Lackfilme herstellen lassen, die nach 30 min/140°C trocken und lösungsmittelbeständig sind.

*Beispiel 13*

Zu einer Lösung von 57,6 g Isopropylidenmalonat, 50 g 4,4'-Diisocyanatodiphenylmethan und 200 g N-Methylpyrrolidon gibt man 20,2 g Triethylamin. Das Gemisch wird 35 Stunden bei 40°C gerührt. Danach sind IR-spektroskopisch keine NCO-Gruppen mehr nachweisbar. Man gibt 150 g Wasser zu und rührt unter Kühlung 35 g 6 N HCl ein. Der entstehende Niederschlag wird abfiltriert, mit kaltem Wasser gewaschen und im Vakuum getrocknet.

Ausbeute: 82 g festes blockiertes Diisocyanat (78% d.Th.) Gehalt an blockierten NCO-Gruppen: 15,5%.

**Patentansprüche**

1. Verfahren zur Herstellung von organischen Polyisocyanaten mit zumindest teilweise blockierten Isocyanatgruppen durch zumindest teilweise Blockierung der Isocyanatgruppen von organischen Polyisocyanaten mit Blockierungsmitteln für Isocyanatgruppen, dadurch gekennzeichnet, dass man als Blockierungsmittel

a) Verbindungen der Formel

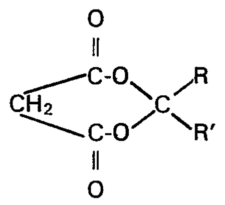

verwendet, wobei

R und R' für gleiche oder verschiedene Reste stehen und Alkylreste mit 1 bis 4 Kohlenstoffatomen bedeuten oder zusammen mit dem, mit den Sauerstoffatomen verknüpften Kohlenstoffatomen einen Cyclohexan- oder Cyclopentanring bilden,

und gegebenenfalls zusätzlich

b) aus der Polyurethanchemie bekannte Blockierungsmittel

verwendet, wobei das Blockierungsmittel a) in, einem Molverhältnis von Blockierungsmittel a) zu Isocyanatgruppen des Ausgangspolyisocyanats von mindestens 0,1 : 1 entsprechenden Mengen zum Einsatz gelangt, und wobei, im Falle der Mitverwendung von Blockierungsmitteln b), diese vor, gleichzeitig mit oder nach der Umsetzung des Ausgangspolyisocyanats mit dem Blockierungsmittel a) mit dem Ausgangspolyisocyanat zur Reaktion gebracht werden.

2. Verfahren gemäss Anspruch 1, dadurch gekennzeichnet, dass man als Blockierungsmittel b) Malonsäuredialkylester, Acetessigsäurealkylester, Ketoxime, Aldoxime, Lactame, gegebenenfalls alkylsubstituierte Phenole oder Gemische derartiger Blockierungsmittel verwendet, wobei das Blockierungsmittel b) in, einem Molverhältnis von Blockierungsmittel zu Isocyanatgruppen des Ausgangspolyisocyanats von maximal 0,9 : 1 entsprechenden Mengen zum Einsatz gelangt.

3. Verfahren gemäss Anspruch 1, dadurch gekennzeichnet, dass man ausschliesslich Blockierungsmittel der unter a) genannten Art in, einem Molverhältnis von Blockierungsmittel zu Isocyanatgruppen des Ausgangspolyisocyanats von 0,3 : 1 bis 1 : 1 entsprechenden Mengen verwendet.

4. Gemäss Anspruch 1 bis 3 erhältliche Polyisocyanate mit zumindest teilweise blockierten Isocyanatgruppen.

5. Verwendung der gemäss Anspruch 1 bis 3 erhältlichen Polyisocyanate mit zumindest teilweise blockierten Isocyanatgruppen als Reaktionspartner für organische Polyhydroxylverbindungen bei der Herstellung von Polyurethankunststoffen, insbesondere Lacken, Beschichtungs- oder Dichtungsmassen auf Polyurethanbasis.

6. Verwendung der gemäss Anspruch 1 bis 3 erhältlichen Polyisocyanate mit zumindest teilweise blockierten Isocyanatgruppen zur Herstellung von wässrigen Einbrennlacken, dadurch gekennzeichnet, dass man die Polyisocyanate mit wässrigen Lösungen oder Dispersionen von organischen Verbindungen mit mindestens zwei gegenüber Isocyanatgruppen reaktionsfähigen Gruppen in Gegenwart einer, die Löslichkeit bzw. Dispergierbarkeit der Polyisocyanate in Wasser gewährleistenden Menge eines tert.-Amins unter Einhaltung eines Äquivalentverhältnisses von blockierten Isocyanatgruppen zu gegenüber Isocyanatgruppen reaktionsfähigen Gruppen von 0,1 : 1 bis 1 : 1,2 gegebenenfalls unter Mitverwendung von in der Lacktechnologie üblichen Hilfs- und Zusatzmitteln vermischt.

7. Verwendung der gemäss Anspruch 1 bis 3 erhältlichen Polyisocyanate mit zumindest teilweise blockierten Isocyanatgruppen zur Herstellung von wässrigen Polyisocyanatlösungen oder -dispersionen, dadurch gekennzeichnet, dass man die Polyisocyanate in Gegenwart einer, die Löslichkeit bzw. Dispergierbarkeit der Polyisocyanate gewährleistenden Menge eines tert.-Amins mit Wasser vermischt.

**Claims**

1. Process for the production of organic polyisocyanates containing at least partly blocked isocyanate groups by at least partly blocking the isocyanate groups of organic polyisocyanates with blocking agents for isocyanate groups, characterised in that the blocking agents used are

a) compounds of the formula

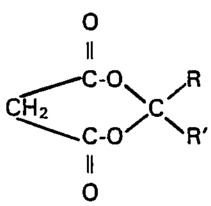

wherein

R and R′ represent identical or different radicals and denote alkyl radicals with 1 to 4 carbon atoms or, together with the carbon atom attached to the oxygen atoms, form a cyclohexane or cyclopentane ring, and, optionally, in addition,

b) blocking agents known from polyurethane chemistry, the blocking agent a) being used in quantities corresponding to a molar ratio of blocking agent a) to isocyanate groups in the starting polyisocyanate of at least 0.1 : 1 and, where blocking agents b) are also used, they are reacted with the starting polyisocanate before, at the same time as or after the reaction of the starting polyisocyanate with the blocking agent a).

2. Process according to claim 1, characterised in that malonic acid dialkyl esters, acetoacetic acid alkyl esters, ketoximes, aldoximes, lactams, optionally alkyl-substituted phenols or mixture of such blocking agents are used as the blocking agent b), the blocking agent b) being used in quantities corresponding to a molar ratio of blocking agent to isocyanate groups in the starting polyisocyanate of at most 0.9 : 1.

3. Process according to claim 1, characterised in that the sole blocking agents used are those of the type mentioned under a) in quantities corresponding to a molar ratio of blocking agent to isocyanate groups in the starting polyisocyanate of 0.3 : 1 to 1 : 1.

4. Polyisocyanates containing at least partly blocked isocyanate groups obtainable according to claim 1 to 3.

5. Use of the polyisocyanates containing at least partly blocked isocyanate groups obtainable according to claim 1 to 3 as reactants for organic polyhydroxyl compounds in the production of polyurethane plastics, in particular polyurethane-based lacquers, coating compositions or sealing compounds.

6. Use of the polyisocyanates containing at least partly blocked isocyanate groups obtainable according to claim 1 to 3 for the production of aqueous stoving lacquers characterised in that the polyisocyanates are mixed with aqueous solutions or dispersions of organic compounds containing at least two groups which are reactive towards isocyanate groups in the presence of a quantity of a tert.-amine which guarantees the solubility or dispersibility of the polyisocyanates in water, an equivalent ratio of blocked isocyanate groups to groups reactive towards isocyanate groups of 0.1 : 1 to 1 : 1.2 being maintained, and optionally also using auxiliaries and additives customary in lacquer technology.

7. Use of the polyisocyanates containing at least partly blocked isocyanate groups obtainable according to claim 1 to 3 for the production of aqueous polyisocyanate solutions or dispersions, characterised in that the polyisocyanates are mixed with water in the presence of a quantity of a tert.-amine which guarantees the solubility or dispersibility of the polyisocyanates.

**Revendications**

1. Procédé de production de polyisocyanates organiques à groupes isocyanato au moins partiellement protégés, par protection au moins partielle des groupes isocyanato de polyisocyanates organiques avec des agents pour la protection de tels groupes, caractérisé en ce qu'on utilise comme agents de protection

a) des composés de formule

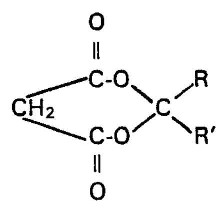

dans laquelle

R et R′ représentent des restes identiques ou différents et désignent des restes alkyle ayant 1 à 4 atomes de carbone ou forment conjointement avec l'atome de carbone lié aux atomes d'oxygène, un noyau de cyclohexane ou cyclopentane,

et en outre, le cas échéant

b) des agents de protection connus dans la chimie des polyuréthannes,

l'agent de protection a) étant utilisé en quantités correspondant à un rapport molaire de l'agent de protection a) aux groupes isocyanato du polyisocyanate de départ d'au moins 0,1 : 1 et, dans le cas de l'utilisation simultanée d'agents de protection b), ces derniers sont mis en réaction avec le polyisocyanate de départ avant, pendant ou après la réaction du polyisocyanate de départ avec l'agent de protection a).

2. Procédé suivant la revendication 1, caractérisé en ce qu'on utilise comme agents de protection b) des esters dialkyliques d'acide malonique, des esters alkyliques d'acide acétylacétique, des cétoximes, des aldoximes, des lactames, des phénols éventuellement porteurs de substituants alkyle ou des mélanges de tels agents de protection, l'agent de protection b) étant utilisé en quantités correspondant à un rapport molaire de l'agent de protection aux groupes isocyanato du polyisocyanate de départ au maximum égal à 0,9 : 1.

3. Procédé suivant la revendication 1, caractérisé en ce qu'on utilise exclusivement des agents de protection du type mentionné en a), en quantités correspondant à un rapport molaire de l'agent de protection aux groupes isocyanato du polyisocyanate de départ de 0,3 : 1 à 1 : 1.

4. Polyisocyanates obtenus conformément aux revendications 1 à 3, portant des groupes isocyanato au moins partiellement protégés.

5. Utilisation des polyisocyanates obtenus conformément aux revendications 1 à 3, porteurs de groupes isocyanato au moins partiellement protégés, comme partenaires réactionnels de composés organiques polyhydroxyliques dans la production de matières plastiques du type polyuréthanne, notamment de peintures, de mélanges d'enduction ou d'étanchéité, à base de polyuréthanne.

6. Utilisation des polyisocyanates obtenus conformément aux revendications 1 à 3, portant des groupes isocyanato au moins partiellement protégés, pour l'obtention de vernis aqueux au four, caractérisée en ce qu'on mélange les polyisocyanates avec des solutions ou des dispersions aqueuses de composés organiques portant au moins deux groupes réactifs envers des groupes isocyanato, en présence d'une quantité d'une amine tertiaire assurant la solubilité ou la dispersibilité des polyisocyanates dans l'eau, en maintenant un rapport d'équivalents des groupes isocyanato protégés aux groupes réactifs envers les groupes isocyanato de 0,1 : 1 à 1 : 1,2, en utilisant en même temps, le cas échéant, des adjuvants et additifs d'emploi classique dans la technologie des peintures.

7. Utilisation des polyisocyanates obtenus conformément aux revendications 1 à 3, portant des groupes isocyanato au moins partiellement protégés, pour la préparation de solutions ou dispersions aqueuses de polyisocyanates, caractérisé en ce qu'on mélange les polyisocyanates avec de l'eau en présence d'une quantité d'une amine tertiaire assurant la solubilité et la dispersibilité des polyisocyanates.